**Europäisches Patentamt**

**European Patent Office**

**Office européen des brevets**

(11) Publication number: **0 127 169**
**B1**

# (12) EUROPEAN PATENT SPECIFICATION

(45) Date of publication of patent specification: **10.05.89**

(51) Int. Cl.⁴: **G 01 T 1/29**

(21) Application number: **84106075.9**

(22) Date of filing: **28.05.84**

(54) Method of measuring radiation intensity.

(30) Priority: **27.05.83 JP 93597/83**

(43) Date of publication of application:
**05.12.84 Bulletin 84/49**

(45) Publication of the grant of the patent:
**10.05.89 Bulletin 89/19**

(84) Designated Contracting States:
**CH DE FR LI NL SE**

(56) References cited:
**EP-A-0 077 678**
**EP-A-0 127 168**
**EP-A-0 127 170**
**EP-A-0 127 866**
**EP-A-0 129 109**
**US-A-2 745 968**
**US-A-3 339 070**
**US-A-3 883 738**
**US-A-3 935 449**
**US-A-4 380 702**

(73) Proprietor: **FUJI PHOTO FILM CO., LTD.**
**210 Nakanuma Minami Ashigara-shi**
**Kanagawa 250-01 (JP)**

(72) Inventor: **Shiraishi, Hisashi c/o Fuji Photo Film**
**Co. Ltd.**
**No 210, Nakanuma Minami-ashigara-shi**
**Kanagawa (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

## Description

The present invention relates to a method of measuring the intensity of radiation emitted by a radioactive substance.

Heretofore, as methods of measuring the intensity of radiation of a radioactive substance (substance containing a radioisotope), namely radioactivity thereof, there are known, for example, scintillation counting methods using a substance (so-called scintillator) capable of absorbing a portion of radiation energy emitted by the radioactive substance and emitting light (fluorescence).

In this method, the radioactivity of radioactive substance is measured by causing the scintillator to absorb a radiation emitted by the sample, detecting light emitted by the scintillator by means of a photomultiplier and counting it as electric pulse. For example, there is well known a liquid scintillation counting method wherein a liquid scintillator composed of a solute (fluorescent agent) dissolved in an organic solvent is introduced into a liquid sample to detect radioactivity of the liquid sample.

In the case of measuring a low-energy radiation such as α-rays or β-rays using the above-mentioned scintillation counting method, the radiation emitted by a sample is measured by mixing (dissolving or suspending) the sample with the liquid scintillator in a measuring container. On the other hand, in the case of measuring a high-energy radiation such as γ-rays, the radiation emitted by a sample is usually measured by placing the scintillator outside the sample container.

As a special measuring container (namely vial) for γ-ray measurement, there has been developed a measuring container for counting liquid scintillation, wherein the liquid scintillator is sealed up in the side and bottom walls of the container.

The scintillation counting method is applied, for instance, to the measurement of radioactivity of the tissue of an organism and/or substances originating from organism which contains a radioactive substance. It is generally difficult to dissolve such a sample in a solvent so that the sample is burnt in an oxygen-containing atmosphere to convert $^{14}C$ in the sample into $^{14}CO_2$ which is then absorbed by an appropriate absorbent, and a liquid scintillator is introduced thereinto to measure radioactivity of the sample. The measurement of $^{14}CO_2$ produced by a chemical reaction such as an enzyme reaction is also conducted in the same manner as mentioned above.

In a radio-gas chromatography, the radioactivity of a sample is measured after dissolving the collected gaseous sample in a solution containing a scintillator.

When the sample is a solid sample from which a strong radiation such as γ-rays radiates, the radioactivity of the sample is measured using a well-type scintillation counter composed of a combination of a solid scintillator with a photomultiplier and fixing the sample together with the container in the cavity (well) of the scintillator. By means of this well-type scintillation counter, the measurement of radioactivity of a sample in the form of a liquid or a gas sealed in a tube can be conducted in a similar manner.

As described above, the scintillation counting method is a useful means for measuring the radioactivity of samples. Particularly, the liquid scintillation counting method has many advantages in that even when a radiation from a radioactive substance is a feeble one such as α-rays or β-rays, the radioactivity thereof can be measured, so that said method is widely used for the measurement of radioactivity of samples.

The mechanism of scintillation in the liquid scintillation counting method is described as follows: A solvent molecule dissolving a solute (fluorescent agent) is initially excited by a radiation emitted by a radioactive substance in a liquid sample, and then a solute molecule (scintillator) is excited through impingement of the excited solvent molecule on the solute molecule, or the like. In the course of transferring of the radiation energy from the solvent molecule to the solute molecule, there occur other phenomena such that the energy is transferred between the solvent molecules by interaction between the solvent molecule in the excited state and that in the ground state, or that the energy is transferred from the solvent molecule in the excited state to the other solute molecule than a scintillator by interaction therebetween before the scintillator is excited. The transfer of energy takes place not only through the interaction between molecules such as impingement, but also through such a phenomenon that the scintillator absorbs light emitted by the excited solvent molecule or other excited solute molecule.

However, in the course of the energy-transfer procedure, there also occurs such a quenching phenomenon that the excitation energy is absorbed by a portion of the solvent molecules or other solute molecules so as to be converted into heat, etc., or that the light emitted by the scintillator is absorbed by a light-absorbing substance contained in the sample.

The liquid scintillator, which is essential to said liquid scintillation counting method, is expensive and has to be isolated and refined to re-use it. Usually, it is difficult to recover the scintillator in a high purity so that it is not generally re-used and the measuring cost is increased thereby. Further, there are problems in handling thereof. For example, the used scintillator containing the radioisotope may cause a problem in the disposal stage.

Other problems reside in that the solvents allowed to use in conjunction the solutes (fluorescent agent) are generally limited to certain organic solvents so that there is difficulty in choosing a solvent for a sample and specific procedure has to be taken in preparing a sample in the case that the sample is sparingly soluble in the solvent.

Since the scintillation mechanism of the liquid scintillator is complicated as stated above, the counting efficiency (that is, intensity of radioactivity to be detected) is apt to decrease by the quenching effect due to impurities contained in a sample or the sample *per se*. For example, light emitted by the scintillator is liable to be quenched by the oxygen dissolved in the liquid scintillator, or to be absorbed (i.e. quenched) by a colorant in the case that the sample solution is colored thereby. In the case that a sample is sparingly soluble, it is not easy to prepare a sample solution in a homogeneous phase, and the unhomogeneous phase thereof causes internal absorption of a radiation emitted from the sample. For this reason, it is necessary to accurately determine the counting efficiency of the sample by making correction for quenching caused by the above-mentioned various phenomena, and this makes measuring operation complicated. Further, there is a disadvantage that it is substantially difficult to accurately measure the radioactivity of the sample even if the correction for quenching is made.

In order to prevent the counting efficiency from being lowered by quenching effect of contaminants, impurities and colored substances contained in the sample, the sample has to be carefully prepared and high skill and much experience are required for operators. The pretreatment of the sample to remove the contaminants is of importance to the measuring operation.

In the conventional scintillation counting method, the measurement of radioactivity of a sample is conducted by a real time operation. Namely, it is necessary to continuously measure light emitted by the scintillator for a given time (for example, for several minutes to several ten minutes) after the sample is introduced into the scintillator solution. If the intensity of radiation from the sample is low, the measuring time (i.e., counting time) extends for a long time so that it can be hardly said that the measuring efficiency and the handling efficiency of measuring apparatus are sufficiently high. Therefore, in the case that a great number of samples are involved, for instance, the case that a great number of samples obtained from liquid chromatography are involved, it is difficult to treat such a great number of samples once and the waiting period accordingly extends for many hours so that it disadvantageously takes a long time until the results are be obtained. Particularly, in the case that the half-life of radioisotope in the sample is short, it becomes difficult to measure the radioactivity thereof. Further, in the case that the radiation intensity is low, the measurement becomes more difficult. This means that an apparatus (for example, dark current drift of photomultiplier) to be used must be stable over a long period of time. To keep the stability of apparatus, the apparatus becomes expensive, or much skill and experience to adjust the apparatus are required.

EP—A—0 077 678 discloses a radiation image recording system in which a radiation image is recorded on a stimulable phosphor sheet and then read out for reproducing a visible radiation image. The stimulable phosphor used as recording material has the form of a layer attached to a supporting material. The recording material may be re-used after erasing the stored energy remaining after the read-out operation.

A radiation image storage panel having a fluorescent layer which comprises a binder and a stimulable phosphor dispersed therein is disclosed in US—A—4 380 702. Further, the panel has a light-reflecting white pigment layer on one side thereof with respect to the fluorescent layer opposite to the side exposed to the stimulating rays for said stimulable phosphor. The purpose of the light-reflecting layer is to obtain images of high sharpness. In column 9, lines 1 and 11 of this document it is stated that a substrate for supporting the light-reflecting white pigment layer and the phosphor layer is generally provided on one side thereof with respect to the phosphor layer opposite to the side exposed to the stimulating rays for said stimulable phosphor contained in the phosphor layer. Preferably, the substrate should have the form of a sheet or a roll having flexibility to facilitate the handling of the panel as an information recording medium.

US—A—3 935 449 is related to a method for use in liquid scintillation measurements to supply an accurately determined amount of radioactive substance to a fluid scintillation system for a calibration measurement. A carrier which is introduced into the fluid scintillation system adsorbs the accurately determined amount of the radioactive substance.

An air monitoring system having a scintillating plastic and a phosphorescent film with means to detect light pulses with different decay times is described in US—A—3 339 070. This system comprises a block of scintillating plastic surrounding both a phosphorescent film and a filter which is adapted to collect particulate matter in the atmosphere. This block has an air entrance and an air exit for allowing an air flow through the interior of the block of scintillating plastic such that the air passes through the filter. The particulate matter is collected on the filter. The inner surface of the void of the scintillating block upstream of the filter is coated with a thin layer of the phosphorescent film. The phosphorescent film and the filter absorb substantially all alpha particles emitted from the particulate matter in the filter while transmitting substantially all of the emitted beta particles, which are then absorbed in the scintillation plastic block. A photomultiplier tube is in close contact with the scintillating plastic block and provides electrical pulses when light pulses produced in the scintillating plastic or in the phosphorescent film are produced by the interaction with beta particles and alpha particles, respectively.

US—A—2 745 968 discloses a phosphor element usable for the detection and measurement of penetrative radiation such as gamma rays. The phosphor elements used are able to convert penetrative radiation to radiation in other ranges of the spectrum such as the ultraviolet range and the visible light range. Phosphor per se is distributed as a solid or liquid and as a dispersion or a solute, or both in a matrix of a material capable of being shaped as desired and capable of conducting the radiation developed in the phosphor.

US—A—3 883 738 discloses a container made of a scintillating material. A tube for receiving a radioactive substance is placed in the container of scintillating material. Counter means are provided to detect the light pulses produced by the radiation emitted by the radioactive substance and interacting with the scintillating material.

The invention as claimed is intended to remedy the above-mentioned problems associated with the conventional scintillation counting method, particularly the liquid scintillation counting method.

This object is solved by the features of claim 1.

Advantageous embodiments of the invention are claimed by the subclaims.

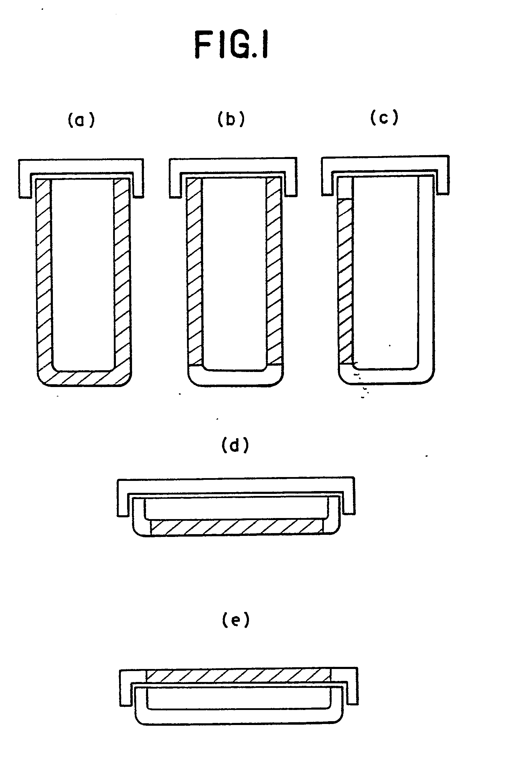

Embodiments of a radiation-storing container are shown in Figs. 1(a) to 1(e) illustrating schematically vertical cross-sections.

Detailed description of the invention

The stimulable phosphor used in the present invention has the property of emitting light (giving stimulated emission) when excited with an electromagnetic wave (stimulating rays) such as visible light or infrared rays after absorbing a radiation. Accordingly, the radioactivity of a sample can be measured in such a manner that a radiation storing container with stimulable phosphor within its body is caused to absorb a radiation radiated from a radioactive substance in a sample, and then the container is irradiated with an electromagnetic wave (stimulating rays) such as visible light or infrared rays to release the radiation energy stored in the container in proportion to the applied radiation dose as light emission (stimulated emission), which is photoelectrically detected and converted into an electric signal.

According to the method of the present invention, the conventional scintillator is not required in the measurement of the radioactivity of a sample, and the operation of mixing (dissolving or suspending) the scintillator with the sample in a container is not either required, although said operation has to be performed in the conventional liquid scintillation counting method. In the method of the present invention, the measurement can be made merely by introducing the sample containing a radioactive substance into a radiation storing container containing a stimulable phosphor in the body thereof so that it is not necessary to separate the phosphor from the sample and to refine it after use. Accordingly, the radiation-storing container can be repeatedly used and the cost for one measurement can be reduced. The radiation-storing container is very easy to handle, becuase it can be made of plastic material etc.

A solvent is not necessarily employed in the present invention, but if desired, an appropriate solvent can be employed, which is different from the conventional liquid scintillation counting method. Accordingly, the selection of a solvent and the preparation of a sample solution required in the use of the liquid scintillator are not always required in the method of the invention.

The sample is not necessarily dissolved in a solvent to prepare a liquid sample, and even when the sample is in the form of a solid or a gas, the radioactivity thereof can be easily measured by introducing the sample into the radiation-storing container.

Further, the above-mentioned quenching phenomena, particularly such as the phenomenon of quenching of the emitted light does not occur in the present invention. Hence, it is not necessary to make complicated quenching correction (determination of counting efficiency) for measuring the radioactivity of the sample, and the radioactivity thereof can be accurately measured without being greatly influenced by measuring conditions, etc. Accordingly, the measuring operation is simplified in this respect.

Since it is not in particular necessary to remove impurities, etc. contained in the sample, the pretreatment of the sample as stated hereinbefore is not required, and much skill and attention based on experience are not required in the course of the preparation of the sample. The measurment of the radioactivity of the sample can be easily made still in this respect.

The measurement of radiation intensity in the present invention basically comprises a step of storing radiation energy from a sample in the radiation-storing container containing stimulable phosphor within its body, and a step of detecting stimulated emission corresponding to the radiation energy stored in said container. It is also possible to completely separate these two steps from each other. Storing the radiation energy in the container is conducted by placing the sample in the container for a certain period of time, so that accuracy of measurement can be increased by choosing preferred storing time. Reading out the stimulated emission is conducted by irradiating the radiation-storing container with an appropriate light (light having a wavelength within the region of stimulation wavelength for the stimulable phosphor enclosed in the container) and causing the stimulable phosphor to emit light. By counting the amount of the emission, the intensity of radiation from the sample can be determined. Since the stimulable phosphor instantaneously emits light upon irradiation with stimulating rays, the period for photometric measurement of the stimulated emission (i.e. measuring time of radiation intensity) can be set independently of the radiation intensity, so that the measuring time can be greatly shortened. For example, a period of several seconds to several ten seconds is sufficiently employed as the measuring time.

Therefore, a great number of samples can be measured in one lot so that the working efficiency of the apparatus is increased, and the number of the measurement per a unit time can be increased. Further, the storing operation for a great number of samples can be stimultaneously made by using a plurality of the radiation-storing containers, that is, the measurement of these samples can be made under the same conditions. This means that the radioactivities of a great number of samples can be measured with high accuracy under the same conditions even when a radioisotope having a short half-life and a feeble radiation is used. Further, when a plurality of the radiation-storing containers are used with only one measuring apparatus in the present invention, the measuring efficiency can become substantially equal to that obtained in the case that a plurality of measuring apparatuses are used together in the conventional method.

The following illustrates the radiation-storing container in more detail.

The radiation-storing container comprises a housing part for a sample and a lid part. The lid is not always necessary and may be used according to the shape of the container, the type of the sample and measuring conditions. The shape of the container may be in any form of a cylindrical, prismatic and bagged shape, but the cylindrical or prismatic shape is generally preferred from the viewpoint of the convenience for detecting radiation energy stored in the container. The stimulable phosphor contained in the container is not always contained in the whole portion of the container, and it may be contained within a part of the container.

As typical embodiments of the radiation-storing container, there may be mentioned the following:

(1) Radiation-storing container having the stimulable phosphor-contained in the whole portion of the housing part thereof:

(2) Radiation-storing container having the stimulable phosphor contained in at least a part of the side wall thereof;

(3) Radiation-storing container having the stimulable phosphor contained in at least a part of the bottom thereof; and

(4) Radiation-storing container having the stimulable phosphor contained in at least a part of the lid thereof.

In the case that the surface area of the part containing the stimulable phosphor is increased with respect to the container of the present invention, the ability of capturing of a radiation from a sample and the accuracy of measured value can be improved, and the detection of a trace amount of a radioactive substance in the sample or the detection of a substance exhibiting a low radiation intensity becomes possible. On the other hand, from the viewpoint of convenience of detecting radiation energy, it is preferred to use an embodiment wherein the stimulable phosphor is contained in a part of the container. In such a case, it is desirable that the phosphor is contained in a part which is to be in contact with the sample. Further, it is preferred to use a radiation-storing container wherein the distance between the part containing the phosphor and the radioactive substance (radiation source) in the sample is as short as possible from the viewpoint of the range of a radiation from the sample.

Therefore, it is desirable to choose the shape of the container according to the amount, the condition and the radiation intensity of a sample to be measured and measuring conditions in the measurement of the content of the radioactive substance in the present invention.

Figure 1 is a vertical section diagrammatically showing the embodiments of the cylindrical radiation-storing container wherein the container contains a stimulable phosphor within the body thereof at each area represented by the shaded portion, and wherein:

(a) shows a radiation-storing container containing the stimulable phosphor in a dispersed state in the whole porton of the housing part thereof,

(b) shows a radiation-storing container containing the stimulable phosphor in a dispersed state in the whole porton of the side wall thereof,

(c) shows a radiation-storing container containing the stimulable phosphor in a dispersed state in a portion of the side wall thereof,

(d) shows a radiation-storing container containing the stimulable phosphor in a dispersed state in a whole portion of the bottom thereof, and

(e) shows a radiation-storing container containing the stimulable phosphoor in a dispersed state in a portion of the lid thereof.

The above five kinds of the embodiments are provided only to illustrate certain typical cases, but are not to be construed as limiting the container. For example, the containers of the above (a) to (d) may have no lid. Further, in the above (b) to (e) the stimulable phosphor is not always fixed to the containers but may be detachably provided within the container.

The stimulable phosphor, as described hereinbefore, give stimulated emission when irradiated with stimulating rays after exposure to a radiation. From the viewpoint of practical use, the stimulable phosphor is desired to give stimulated emission in the wavelength region of 300—500 nm when excited with stimulating rays in the wavelength region of 400—850 nm.

Examples of the stimulable phosphor employable in the radiation-storing container include:

$SrS:Ce,Sm$, $SrS:Eu,Sm$, $ThO_2:Er$, and $La_2O_2S:Eu,Sm$, as described in U.S. Patent No. 3,859,527;

$ZnS:Cu,Pb$, $BaO \cdot xAl_2O_3:Eu$, in which $x$ is a number satisfying the condition of $0.8 \leq x \leq 10$, and $M^{2+}O \cdot xSiO_2:A$, in which $M^{2+}$ is at least one divalent metal selected from the group consisting of Mg, Ca, Sr, Zn, Cd and Ba, A is at least one element selected from the group consisting of Ce, Tb, Eu, Tm, Pb, Tl, Bi and Mn, and $x$ is a number satisfying the condition of $0.5 \leq x \leq 2.5$, as described in U.S. Patent No. 4,326,078;

$(Ba_{1-x-y},Mg_x,Ca_y)FX:aEu^{2+}$, in which X is at least one element selected from the group consisting of Cl and Br, $x$ and $y$ are numbers satisfying the conditions of $0 < x+y \leq 0.6$, and $xy \neq 0$, and

$a$ is a number satisfying the condition of $10^{-6} \leqq a \leqq 5 \times 10^{-2}$, as described in Japanese Patent Provisional Publication No. 55(1980)-12143;

LnOX:xA, in which Ln is at least one element selected from the group consisting of La, Y, Gd and Lu, X is at least one element selected from the group consisting of Cl and Br, A is at least one element selected from the group consisting of Ce and Tb, and $x$ is a number satisfying the condition of $0 < x < 0.1$, as described in the above-mentioned U.S. Patent No. 4,236,078;

$(Ba_{1-x}, M^{II}_x)FX:yA$, in which $M^{II}$ is at least one divalent metal selected from the group consisting of Mg, Ca, Sr, Zn and Cd, X is at least one element selected from the group consisting of Cl, Br and I, A is at least one element selected from the group consisting of Eu, Tb, Ce, Tm, Dy, Pr, Ho, Nd, Yb and Er, and $x$ and $y$ are numbers satisfying the conditions of $0 \leqq x \leqq 0.6$ and $0 \leqq y \leqq 0.2$, respectively, as described in Japanese Patent Provisional Publication No. 55(1980)-12145;

$M^{II}FX \cdot xA:yLn$, in which $M^{II}$ is at least one element selected from the group consisting of Ba, Ca, Sr, Mg, Zn and Cd; A is at least one compound selected from the group consisting of BeO, MgO, CaO, SrO, BaO, ZnO, $Al_2O_3$, $Y_2O_3$, $La_2O_3$, $In_2O_3$, $SiO_2$, $TiO_2$, $ZrO_2$, $GeO_2$, $SnO_2$, $Nb_2O_5$, $Ta_2O_5$ and $ThO_2$; Ln is at least one element selected from the group consisting of Eu, Tb, Ce, Tm, Dy, Pr, Ho, Nd, Yb, Er, Sm and Gd; X is at least one element selected from the group consisting of Cl, Br and I; and $x$ and $y$ are numbers satisfying the conditions of $5 \times 10^{-5} \leqq x \leqq 0.5$ and $0 < y \leqq 0.2$, respectively, as described in Japanese Patent Provisional Publication No. 55(1980)-160078;

$(Ba_{1-x}, M^{II}_x)F_2 \cdot aBaX_2:yEu,zA$, in which $M^{II}$ is at least element selected from the group consisting of Be, Mg, Ca, Sr, Zn and Cd; X is at least one element selected from the group consisting of Cl, Br and I; A is at least one element selected from the group consisting of Zr and Sc; and $a, x, y$ and $z$ are numbers satisfying the conditions of $0.5 \leqq a \leqq 1.25$, $0 \leqq x \leqq 1$, $10^{-6} \leqq y \leqq 2 \times 10^{-1}$, and $0 < z \leqq 10^{-2}$, respectively, as described in Japanese Patent Provisional Publication No. 56(1981)-116777;

$(Ba_{1-x}, M^{II}_x)F_2 \cdot aBaX_2:yEu,zB$, in which $M^{II}$ is at least one element selected from the group consisting of Be, Mg, Ca, Sr, Zn and Cd; X is at least one element selected from the group consisting of Cl, Br and I; and $a, x, y$ and $z$ are numbers satisfying the conditions of $0.5 \leqq a \leqq 1.25$, $0 \leqq x \leqq 1$, $10^{-6} \leqq y \leqq 2 \times 10^{-1}$, and $0 < z \leqq 2 \times 10^{-1}$, respectively, as described in Japanese Patent Provisional Publication No. 57(1982)-23673;

$(Ba_{1-x}, M^{II}_x)F_2 \cdot aBaX_2:yEu,zA$, in which $M^{II}$ is at least one element selected from the group consisting of Be, Mg, Ca, Sr, Zn and Cd; X is at least one element selected from the group consisting of Cl, Br and I; A is at least one element selected from the group consisting of As and Si; and $a, x, y$ and $z$ are numbers satisfying the conditions of $0.5 \leqq a \leqq 1.25$, $0 \leqq x \leqq 1$, $10^{-6} \leqq y \leqq 2 \times 10^{-1}$, and $0 < z \leqq 5 \times 10^{-1}$, respectively, as described in Japanese Patent Provisional Publication No. 57(1982)-23675;

$M^{III}OX:xCe$, in which $M^{III}$ is at least one traivalent metal selected from the group consisting of Pr, Nd, Pm, Sm, Eu, Tb, Dy, Ho, Er, Tm, Yb, and Bi; X is at least one element selected from the group consisting of Cl and Br; and $x$ is a number satisfying the condition of $0 < x < 0.1$, as described in Japanese Patent Provisional Publication No. 58(1983)-69281;

$Ba_{1-x}M_{x/2}L_{x/2}FX:yEu^{2+}$, in which M is at least one alkali metal selected from the group consisting of Li, Na, K, Rb and Cs; L is at least one trivalent metal selected from the group consisting of Sc, Y, La, Ce, Pr, Nd, Pm, Sm, Gd, Tb, Dy, Ho, Er, Tm, Yb, Lu, Al, Ga, In and Tl; X is at least one halogen selected from the group consisting of Cl, Br and I; and $x$ and $y$ are numbers satisfying the conditions of $10^{-2} \leqq x \leqq 0.5$ and $0 < y \leqq 0.1$, respectively, as described in Japanese Patent Provisional Publication No. 58(1983)-206678;

$BaFX \cdot xA:yEu^{2+}$, in which X is at least one halogen selected from the group consisting of Cl, Br and I; A is at least one fired product of a tetrafluoroboric acid compound; and $x$ and $y$ are numbers satisfying the conditions of $10^{-6} \leqq x \leqq 0.1$ and $0 < y \leqq 0.1$, respectively, as described in Japanese Patent Provisional Publication No. 59(1984)-27980;

$BaFX \cdot xA:yEu^{2+}$, in which X is at least one halogen selected from the group consisting of Cl, Br and I; A is at least one fired product of a hexaflouro compound selected from the group consisting of monovalent and divalent metal salts of hexafluoro silicic acid, hexafluoro titanic acid and hexafluoro zirconic acid; and $x$ and $y$ are numbers satisfying the conditions of $10^{-6} \leqq x \leqq 0.1$ and $0 < y \leqq 0.1$ respectively, as described in Japanese Patent Provisional Publication No. 59(1984)-47289;

$BaFX \cdot xNaX':aEu^{2+}$, in which each of X and X' is at least one halogen selected from the group consisting of Cl, Br and I; and $x$ and $a$ are numbers satisfying the conditions of $0 < x \leqq 2$ and $0 < a \leqq 0.2$, respectively, as described in Japanese Patent Provisional Publication No. 59(1984)-56479;

$M^{II}FX \cdot xNaX':yEu^{2+}:zA$, in which $M^{II}$ is at least one alkaline earth metal selected from the group consisting of Ba, Sr and Ca; each of X and X' is at least one halogen selected from the group consisting of Cl, Br and I; A is at least one transition metal selected from the group consisting of V, Cr, Mn, Fe, Co and Ni; and $x, y$ and $z$ are numbers satisfying the conditions of $0 < x \leqq 2$, $0 < y \leqq 0.2$ and $0 < z \leqq 10^{-2}$, respectively, as described in Japanese Patent Provisional Publication No. 59(1984)-56480; and

$M^{II}FX \cdot aM^IX' \cdot bM^{II'}X''_2 \cdot cM^{III}X'''_3 \cdot xA:yEu^{2+}$, in which $M^{II}$ is at least one alkaline earth metal selected from the group consisting of Ba, Sr and Ca; $M^I$ is at least one alkali metal selected from the group consisting of Li, Na, K, Rb and Cs; $M^{II'}$ is at least one divalent metal selected from the group consisting of Be and Mg; $M^{III}$ is at least one trivalent metal selected from the group consisting of Al, Ga, In and Tl; A is at least one metal oxide; X is at least one halogen selected from the group consisting of Cl, Br and I; each of X', X'' and X''' is at least one halogen selected from the group consisting of F, Cl, Br and I; $a$, $b$ and $c$ are numbers satisfying the conditions of $0 \leqq a \leqq 2$, $0 \leqq b \leqq 10^{-2}$, $0 \leqq c \leqq 10^{-2}$ and $a+b+c \geqq 10^{-6}$; and $x$ and $y$ are numbers satisfying the conditions of $0 < x \leqq 0.5$ and $0 < y \leqq 0.2$, respectively, as described in Japanese Patent Application No. 57(1982)-184455.

The above-described stimulable phosphors are given by no means to restrict the stimulable phosphor employable in the present invention. Any other phosphor can be also employed, provided that the phosphor gives stimulated emission when excited with stimulating rays after exposure to a radiation.

Examples of materials of the radiation-storing container include glass, quartz and plastics such as polyethylene, polypropylene, nylon, polyfluoroethylene, etc.

The radiation-storing container can be formed by incorporating the stimulable phosphor into the above-mentioned material. The size, thickness and shape of the radiation-storing container, and the amount and area of the stimulable phosphor to be contained within its body can be determined according to the condition and amount of samples to be measured and the measuring conditions.

If desired, the radiation-storage container may be in the form of a small bag composed of a polyester film containing a stimulable phosphor.

The radiation-storing container containing stimulable phosphor in the body thereof may have said phosphor (in the form of particles) being dispersed in a binder.

Examples of the binder include: natural polymers such as proteins (e.g. gelatin), polysaccharides (e.g. dextran) and gum arabic; and synthetic polymers such as polyvinyl butyral, polyvinyl acetate, nitrocellulose, ethylcellulose, vinylidene chloride-vinyl chloride copolymer, polymethyl methacrylate, vinyl chloride-vinyl acetate copolymer, polyurethane, cellulose acetate butyrate, polyvinyl alcohol, and linear polyester. Particularly preferred are nitrocellulose, linear polyester, and a mixture of nitrocellulose and linear polyester.

Examples of the solvent employable for dispersing the stimulable phosphor particles in the binder include lower alcohols such as methanol, ethanol, n-propanol and n-butanol; chlorinated hydrocarbons such as methylene chloride and ethylene chloride; ketones such as acetone, methyl ethyl ketone and methyl isobutyl ketone; esters of lower alcohols with lower aliphatic acids such as methyl acetate, ethyl acetate and butyl acetate; ethers such as dioxane, ethylene glycol monoethylether and ethylene glycol monoethyl ether; and mixtures of the above-mentioned compounds.

The ratio between the binder and the phosphor in the dispersion may vary according to the kind of the phosphor employed, etc. Generally, the ratio therebetween is within the range of from 1:1 to 1:100 (binder:phosphor, by weight), preferably from 1:8 to 1:40.

The dispersion may contain a dispersing agent to assist the dispersibility of the phosphor particles therein, and also contain a variety of additives such as a plasticizer for increasing the bonding between the binder and the phosphor particles in the phosphor layer. Examples of the dispersing agent include phthalic acid, stearic acid, caproic acid and a hydrophobic surface active agent. Examples of the plasticizer include phosphates such as triphenyl phosphate, tricresyl phosphate and diphenyl phosphate; phthalates such as diethyl phthalate and dimethoxyethyl phthalate; glycolates such as ethylphthalyl ethyl glycolate and butylphthalyl butyl glycolate; and polyesters of polyethylene glycols with aliphatic dicarboxylic acids such as polyester of triethylene glycol with adipic acid and polyester of diethylene glycol with succinic acid.

The container may be a layer structure comprising a support made of a plastic material such as polyethylene terephthalate and a layer (phosphor layer) composed of a stimulable phosphor dispersed in a binder. Namely, the container may be prepared by heat-treating a sheet comprising a support and a phosphor layer to form a container.

Alternatively, the container may be in a structure wherein a molded article composed of a stimulable phosphor dispersed in a binder is put in a portion of the container composed of the aforementioned material. It is desirable that the detachable molded article is covered with a transparent polymer material such as polyethylene or polyethylene terephthalate to protect chemically and physically the phosphor.

In the present invention, it is not always necessary to introduce a sample directly into the container. The sample is placed in a separate container, the sample together with said container is inserted into the radiation-storing container and the measurement may be made.

The following illustrates the operation of the measurement of radiation intensity according to the present invention using the radiation-storing container containing the stimulable phosphor within its body.

Samples to be measured in the present invention may be in any form of a solid, liquid and gas. However, in the case that the sample is a gas or a volatile substance, it is necessary to measure it in a state where the container is sealed up. In the case that the sample is a liquid, it is preferred to be in a homogeneous phase to enhance the accuracy of measurement. As solvents for a sample solution, any solvent immiscible with the material of the container may be used. In the case that the sample is a solid, a powdered form is preferred.

Therefore, the samples of the present invention are not limited to liquids, and it is possible to measure the radioactivity of solid substances such as the tissue of radioactively labeled organism and substances originating from the organism, said substances being difficultly solubilized. It is also possible to measure the radioactivity of volatile samples.

In order to determine the radiation intensity of the radioactive substance with high accuracy, however, the sample is preferably a liquid or a solid.

Any radiation such as α-rays, β-rays, γ-rays, proton beam, neutron beam, light beam, meson beam and cosmic rays radiated by the radioactive substance in the sample can be measured. Namely, any radiation radiated by radionuclide can be measured.

A sample is first introduced into the radiation-storing container containing the stimulable phosphor in a dark room, and at least a portion of radiation energy emitted by a radioactive substance in the sample is caused to be absorbed by the stimulable phosphor in the container. The exposure time varies depending on the intensity of radioactivity of the radioactive substance in the sample, the amount and density of said radioactive substance, the shape of the radiation-storing container and the luminance of stimulated emission of the phosphor. The exposure time generally ranges from several seconds to several minutes.

After exposure to a radiation emitted by the sample for a certain time, the radiation-storing container in which the radiation energy is stored is subjected to a detecting operation. The detecting operation may be carried out using the container containing a sample as such. Alternatively, the sample is taken out of the container, which is then washed and subjected to the detecting operation. Preferably, the detecting operation is conducted after the sample is taken out of the container. It is also preferred to conduct the detecting operation in a dark room.

The detection of the radiation energy emitted by the sample and stored in the container containing the stimulable phosphor is carried out as follows: the container is irradiated with light having a wavelength within the region of stimulation wavelength for the stimulable phosphor to emit light (stimulated emission) in the amount proportional to the stored radiation energy, and then the stimulated emission is detected by a photodetector such as photomultiplier. As this photodetector, there is employed a detector provided with a filter which transmits only light in the wavelength region of stimulated emission.

The stimulated emission detected by the photodetector is converted to an electric signal (electric pulse) which is then amplified by an amplifier and input into a pulse height analyzer where noises from said photodetector and caused by the incorporation of natural radioactivity are removed. The electric pulse from which noises have been removed is input into a counting circuit to count it and the counted value is input into a data processing circuit.

In the data processing circuit, the intensity of radioactivity is calculated according to detecting efficiency (luminance efficiency of stimulated emission) previously input and exposure time, and the amount or concentration of the radioactive substance contained in the sample is also calculated by inputting the intensity of radioactivity per 1 mole of the radioactive substance. The resulting data are transmitted to a display device and a recorder.

In this way, the intensity of radioactivity of the sample and/or the amount or concentration of the radioactive substance can be represented as digital data.

However, the above-described method (detecting method) for detecting radiation energy stored in the measuring container is given by no means to limit the method therefor.

After the radiation-storing container containing the stimulable phosphor within the body thereof is washed with a solvent, the container is irradiated with light to erase the remaining energy therein and the so treated container can be re-used.

By using the radiation-storing container the quenching phenomenon caused by the internal absorption of emission in the conventional scintillation counting method, or the quenching phenomenon caused by the external absorption of emission caused by the indirect contact of the sample with a scintillator can be eliminated. This means that the complicated operation for calculating the counting efficiency can be eliminated and the radiation intensity emitted by a radioactive substance in a sample can be easily calculated.

According to the present invention, it is further possible to follow the change of a sample with time, in the case that the sample is one having a reactivity such as producing a gaseous radioactive substance by chemical reaction.

Reference is made to the European Patent Publications 0 127 168, 0 129 109, 0 127 866 and 0 127 170.

## Claims

1. A method of measuring the intensity of radiation emitted by a radioactive substance comprising the steps of:

placing a sample containing said radioactive substance in a radiation-storing container at least one wall of which has stimulable phosphor material dispersed therein or a stimulable phosphor layer thereon, said phosphor being of the type able to store radiation energy upon exposure thereof to radiation from a radioactive substance, and subsequently emit light upon stimulation by electromagnetic wave radiation;

after storing of said energy is completed, irradiating said container with electromagnetic wave radiation of different energy from that from the radioactive substance to release the radiation energy stored in said container as light, and

photoelectrically detecting the emitted light to measure the radioactivity of said substance.

2. The method according to claim 1, wherein the stimulable phosphor is dispersed in a binder.

3. The method as claimed in claim 1, wherein the radiation-storing container is made of a plastic material containing said stimulable phosphor.

4. The method as claimed in claim 1, wherein the radiation-storing container is made of glass or of quartz containing said stimulable phosphor.

5. The method as claimed in any one of claims 1 to 4, wherein the stimulable phosphor is a divalent europium activated alkaline earth metal fluorohalide phosphor.

## Patentansprüche

1. Ein Verfahren zur Messung der Intensität der von einer radioaktiven Substanz abgegebenen Strahlung, mit den Schritten des:

Einbringens einer die genannte radioaktive Substanz enthaltenden Probe in einen strahlungsspeichernden Behälter, wobei wenigstens eine Wandung desselben stimulierbares Phosphormaterial verteilt enthält oder eine darauf aufgebrachte stimulierbare Phosphorschicht aufweist, und wobei das genannte Phosphor von der Art ist, die, wenn sie der Strahlung einer radioaktiven Substanz ausgesetzt ist, Strahlungsenergie speichern und bei nachfolgender Stimulation durch elektromagnetische Strahlung Licht abgeben kann;

Bestrahlens des genannten Behälters, nach Beendigung der Energiespeicherung, mit elektromagnetischer Strahlung mit einer Energie, die von derjenigen der radioaktiven Substanz abweicht, um die im genannten Behälter gespeicherte Strahlungsenergie als Licht abzustrahlen, und

photoelektrischen Ermittelns des abgestrahlten Lichtes zur Messung der Radioaktivität der genannten Substanz.

2. Das Verfahren nach Anspruch 1, in welchem das stimulierbare Phosphor in einem Bindematerial verteilt ist.

3. Das Verfahren nach Anspruch 1, in welchem der strahlungsspeichernde Behälter aus einem Kunststoffmaterial hergestellt ist, das den genannten stimulierbaren Phosphor enthält.

4. Das Verfahren nach Anspruch 1, in welchem der strahlungsspeichernde Behälter aus Glas oder Quarz, die den genannten stimulierbaren Phosphor enthalten, hergestellt ist.

5. Das Verfahren nach einem der Ansprüche 1 bis 4, in welchem der stimulierbare Phosphor ein bivalenter europium-aktivierter Erdalkalimetall-Fluorhalogenidphosphor ist.

## Revendications

1. Méthode de mesure de l'intensité d'une radiation émise par une substance radioactive comprenant les étapes de:

placement d'un échantillon contenant la substance radioactive dans un récipient de stockage de radiation dont au moins une paroi comporte un produit luminescent stimulable dispersé à l'intérieur de celle-ci ou, sur celle-ci, une couche de produit luminescent stimulable, le produit luminescent étant du type capable de stocker une énergie de radiation par son exposition à une radiation provenant d'une substance radioactive, et d'émettre ensuite de la lumière par stimulation au moyen d'une radiation d'onde électromagnétique;

après que le stockage de l'énergie est terminé, irradiation du récipient avec une radiation d'onde électromagnétique d'une énergie différente de celle provenant de la substance radioactive pour libérer l'énergie de radiation stockée dans le récipient comme lumière, et

détection photoélectriquement de la lumière émise pour mesurer la radioactivité de la substance.

2. Méthode selon la revendication 1, dans laquelle le produit luminescent stimulable est dispersé dans un liant.

3. Méthode telle que revendiquée dans la revendication 1, dans laquelle le récipient de stockage de radiation est constitué d'une matière plastique contenant le produit luminescent stimulable.

4. Méthode telle que revendiquée dans la revendication 1, dans laquelle le récipient de stockage de radiation est constitué de verre ou de quartz contenant le produit luminescent stimulable.

5. Méthode telle que revendiquée dans l'une quelconque des revendications 1 à 4, dans laquelle le produit luminescent stimulable est un produit luminescent en fluorohalogénure d'un métal alcalino-terreux activé par de l'europium divalent.

# FIG.1

(a)　　　　(b)　　　　(c)

(d)

(e)